# FASCICULE DE BREVET EUROPEEN

(11) **EP 1 493 661 B1**
(45) Date de publication et mention de la délivrance du brevet: **15.02.2006**
(21) Numéro de dépôt: 04291558.7
(22) Date de dépôt: 21.06.2004
(51) Int. Cl.: B64C 25/10, B64C 25/58, B64C 25/34

(54) **Train d'atterissage à jambes indépendantes du type à relevage vertical**
Einziehfahrwerk mit unabhängigen Fahrwerksbeinen und vertikaler Bewegung
Vertically retracting landing gear with individual landing gear legs

(30) Priorité: 02.07.2003 FR 0308034
(43) Date de publication de la demande: 05.01.2005
(73) Titulaire: MESSIER-DOWTY SA, F-78140 Velizy Villacoublay (FR)
(72) Inventeur: Ducos, Dominique, 91600 Savigny-sur-Orge (FR); Locufier, Jean-Francois, 78120 Rambouillet (FR)
(74) Mandataire: Jaunez, Xavier

(56) Documents cités:
- EP-A- 0 676 328
- EP-A- 1 279 591
- US-A- 3 653 682

## Description

### DOMAINE DE L'INVENTION

La présente invention concerne un train d'atterrissage relevable pour aéronef, du type à relevage vertical, comportant une pluralité de jambes indépendantes agencées les unes derrière les autres pour former, en position train bas, une rangée parallèle au plan longitudinal médian de l'aéronef.

### ARRIERE-PLAN DE L'INVENTION

Le document EP-A-1 279 591 de la demanderesse illustre un train d'atterrissage du type précité. On pourra également se référer, pour l'arrière-plan technologique, au document US-A-3 653 682 qui illustre un dispositif d'absorption d'énergie à deux amortisseurs superposés.

Dans certaines situations, lorsque l'aéronef est à l'arrêt ou en déplacement lent au sol, on souhaite pouvoir modifier l'assiette de l'aéronef, c'est-à-dire l'inclinaison de son axe longitudinal et/ou de son axe transversal.

Dans le document US-A-5 310 140 de la demanderesse, on a illustré une approche consistant à modifier la longueur du train avant, sans toucher aux atterrisseurs principaux. La structure de l'amortisseur décrit dans ce document permet d'obtenir aisément un rehaussement du train lorsque l'aéronef est à l'arrêt ou en déplacement lent au sol, sans exiger l'utilisation de la génération hydraulique de l'aéronef, c'est-à-dire sans exiger que les moteurs soient activés.

Le document US-A-5 310 139 de la demanderesse illustre par ailleurs un amortisseur de train avant conçu pour assurer la même fonction.

La présente invention s'intéresse plutôt aux amortisseurs équipant des trains d'atterrissage principaux d'avions gros porteurs, du type à relevage vertical, comportant une pluralité de jambes indépendantes agencées les unes derrière les autres pour former, en position train bas, une rangée parallèle au plan longitudinal de l'avion, et en extrémité de chacune desquelles est montée une paire de roues. De tels trains d'atterrissage relevables pour avions gros porteurs sont par exemple illustrés dans les documents EP-A-0 676 328 qui correspond au préambule de la revendication 1 et EP-A-0 614 804 de la demanderesse.

Dans d'autres situations, on cherche à avoir un raccourcissement ou un allongement d'une ou plusieurs jambes lorsque l'aéronef est à l'arrêt ou en déplacement lent au sol. Un tel raccourcissement ou allongement peut s'avérer en effet intéressant non seulement lorsque l'on veut modifier l'assiette de l'aéronef à l'arrêt, en particulier lors du chargement dudit aéronef, mais aussi dans d'autres situations particulières comme le changement de pneumatique ou le déchargement de la jambe avant pour le soulagement des manoeuvres en virage. En effet, dans cette avant-dernière situation, on utilise classiquement des systèmes de cric permettant de relever la structure d'aéronef pour dégager le pneumatique à remplacer de son contact avec le sol.

### OBJET DE L'INVENTION

L'invention a pour objet de concevoir un train d'atterrissage relevable dont chaque jambe est capable de combiner à la fois des fonctions d'allongement et de raccourcissement, et plus particulièrement avec un agencement capable de procurer une très grande course d'affaissement afin de permettre un chargement de l'aéronef quel que soit le relief du terrain concerné, et quel que soit aussi le type de chariot utilisé, tout en garantissant une assiette et une garde au sol aussi parfaites que possible.

### BREVE DESCRIPTION DE L'INVENTION

Pour résoudre ce problème, l'invention propose un train d'atterrissage relevable d'aéronef, du type à relevage vertical, comportant une pluralité de jambes indépendantes agencées les unes derrière les autres pour former, en position train bas, une rangée parallèle au plan longitudinal médian de l'aéronef, chaque jambe comportant une pièce de structure rigidement solidaire d'une structure d'aéronef, un balancier articulé sur l'extrémité inférieure de ladite pièce de structure de façon que ledit balancier soit déplaçable dans un plan vertical avec sa paire de roues, un amortisseur associé au balancier et comportant un caisson principal et une tige-piston dont une extrémité coulisse dans ledit caisson principal coaxialement à l'axe de celui-ci, un appendice (105) du balancier (103), ainsi que au moins un élément mobile (113) faisant partie de la tringlerie de manoeuvre du train, ledit train étant remarquable en ce que l'amortisseur de chaque jambe est prolongé par une partie de positionnement comportant un caisson secondaire coulissant télescopiquement sur l'autre extrémité de la tige-piston dudit amortisseur en délimitant avec le fond de ladite tige-piston une chambre secondaire de fluide hydraulique qui est reliée à un circuit de commande associé, permettant ainsi de raccourcir la longueur totale de l'amortisseur prolongé en vue d'un affaissement de ladite jambe, et en ce que chaque jambe comporte en outre un vérin de positionnement relié de façon articulée à l'amortisseur prolongé en étant agencé de façon que l'ensemble constitué par ledit vérin de positionnement et ledit amortisseur prolongé soit interposé entre l'appendice du balancier et le au moins un élément mobile, une bielle de liaison étant en outre interposée entre le balancier et la zone d'articulation entre le vérin de positionnement et l'amortisseur prolongé, ledit vérin de positionnement étant agencé pour se rallonger par rapport à une position d'utilisation normale en vue d'un rehaussement de la jambe concernée.

Un tel agencement permet ainsi d'assurer, en plus de la fonction classique d'amortisseur, une double fonction de positionnement, en disposant d'une course d'affaissement et d'une course de rehaussement selon le problème posé.

Conformément à un mode d'exécution particulier, l'amortisseur prolongé est interposé entre la bielle de liaison et l'élément mobile de tringlerie, et le vérin de positionnement est interposé entre la bielle de liaison et l'appendice du balancier.

En variante, on pourra prévoir que l'amortisseur prolongé soit interposé entre la bielle de liaison et l'appendice du balancier, et que le vérin de positionnement soit interposé entre la bielle de liaison et l'élément mobile de tringlerie.

On pourra en outre prévoir que la bielle de liaison est accrochée sur un appendice intermédiaire du balancier situé entre l'axe d'articulation du balancier et l'appendice dudit balancier sur lequel est articulé l'amortisseur prolongé ou le vérin de positionnement.

En particulier, la bielle de liaison pourra être une bielle coudée à trois points d'articulation distincts, dont le premier est associé à l'amortisseur prolongé, le second est associé au vérin de positionnement, et le troisième est associé à l'appendice intermédiaire du balancier. Le balancier pourra en outre être coudé en forme de V à pointe tournée vers le bas, et l'appendice intermédiaire du balancier être agencé au niveau de l'intérieur de ladite pointe.

Conformément à une autre caractéristique avantageuse de l'invention, en position de raccourcissement maximum de l'amortisseur prolongé par suite de la rentrée de la tige-piston dans le caisson secondaire, ledit caisson secondaire vient en butée contre le caisson principal, ce qui garantit une garde au sol prédéterminée pour l'aéronef dans la position d'affaissement maximal des jambes de train concernées.

Avantageusement encore, en position de rallongement maximum du vérin de positionnement par suite de la sortie de la tige du vérin hors du corps dudit vérin, une butée de contrôle intervient, ce qui garantit la constance de la position de rehaussement pour la jambe de train concernée.

Il est par ailleurs avantageux de prévoir que les amortisseurs prolongés du train d'atterrissage ont des circuits de commande agencés pour permettre une commande individuelle sélective ou une commande groupée du raccourcissement desdits amortisseurs. De la même façon, il sera avantageux de prévoir que les vérins de positionnement du train d'atterrissage ont des circuits de commande agencés pour permettre une commande individuelle sélective ou une commande groupée du rallongement desdits vérins.

D'autres caractéristiques et avantages de l'invention apparaîtront plus clairement à la lumière de la description qui va suivre, concernant un mode d'exécution particulier.

### BREVE DESCRIPTION DES DESSINS

Il sera fait référence aux figures des dessins annexés où :
- la figure 1 illustre un train d'atterrissage conforme à l'invention, ici à trois jambes indépendantes, dont chacune est équipée d'un ensemble articulé comportant un amortisseur prolongé et un vérin de positionnement, la position illustrée étant la position train bas ;
- la figure 2 est une coupe axiale, à plus grande échelle, illustrant un amortisseur prolongé équipant chacune des jambes indépendantes du train précité ;
- la figure 3 illustre le train d'atterrissage de la figure 1 en position train haut pour ses deux jambes avant, et en position train bas pour sa jambe arrière ;
- la figure 4 illustre le train d'atterrissage précité en position train bas, avec un raccourcissement maximal pour chacune des jambes, illustrant ainsi une position d'affaissement maximum dudit train ; et
- la figure 5 illustre enfin le même train d'atterrissage avec les vérins de positionnement des jambes qui sont en état de rallongement maximal, illustrant ainsi une position de rehaussement maximum pour les jambes de train.

### DESCRIPTION DETAILLEE DE L'INVENTION

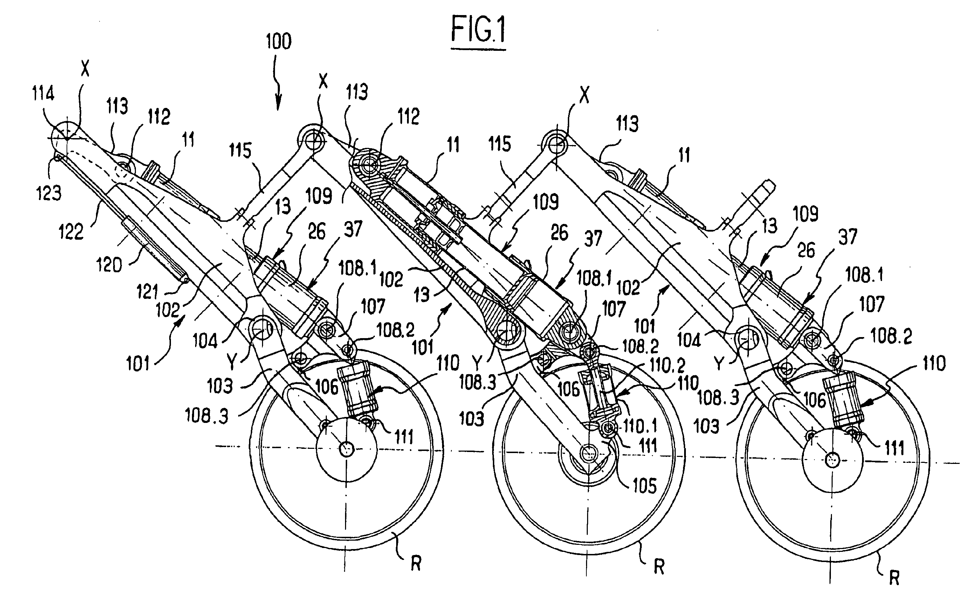

Les figures 1 et 3 à 5 illustrent un train d'atterrissage 100, qui est un train d'atterrissage principal, du type à jambes indépendantes relevables verticalement.

Il s'agit en l'espèce d'un train d'atterrissage pour avion gros porteur, comportant une pluralité de jambes 101 agencées les unes derrière les autres pour former, en position train bas (position illustrée sur la figure 1), une rangée parallèle au plan longitudinal médian de l'aéronef. En l'espèce, ce train principal comporte trois jambes indépendantes 101, mais ceci ne constitue naturellement qu'un exemple. Chaque jambe 101 comporte une pièce de structure 102 qui est rigidement solidaire d'une structure d'aéronef, et un balancier 103 articulé sur l'extrémité inférieure 104 de ladite pièce de structure, selon un axe transversal noté Y. La pièce de structure 102 peut être de tout type classique dans le domaine, en ayant par exemple une forme triangulaire à pointe tournée vers le haut, la pointe du triangle correspondant à l'accrochage sur la structure d'aéronef au niveau d'un axe transversal X, et la base du triangle formé se situant alors au niveau de l'axe Y d'articulation du balancier 103. Chaque balancier 103, équipé d'une paire de roues R, est ainsi déplaçable dans un plan vertical en pouvant pivoter autour de l'axe Y précité qui est perpendiculaire au plan longitudinal médian de l'aéronef.

Le train d'atterrissage illustré ici est également renforcé par des pièces de structure 115, ayant par exemple la forme d'un panneau rectangulaire ou triangulaire présentant un évidement destiné à laisser passer l'ensemble articulé constitué par un amortisseur prolongé et un vérin de positionnement, lequel ensemble sera décrit plus en détail ci-après. Des bielles de rigidification (non représentées ici) seront en général prévues pour raccorder les extrémités supérieures des pièces de structure 102 et des pièces de structure 115.

Chaque jambe 101 comporte en outre un amortisseur 109 présentant un caisson principal 11 et une tige-piston 13 dont une extrémité coulisse dans ledit caisson principal coaxialement à l'axe de celui-ci.

Conformément à une caractéristique de l'invention, l'amortisseur 109 de chaque jambe 101 est prolongé par une partie de positionnement 37 comportant un caisson secondaire 26 coulissant télescopiquement sur l'autre extrémité de la tige-piston 13 dudit amortisseur en délimitant avec le fond de ladite tige-piston une chambre secondaire de fluide hydraulique qui est reliée à un circuit de commande associé, permettant ainsi de raccourcir la longueur totale de l'amortisseur prolongé 109 en vue d'un affaissement de la jambe 101 concernée.

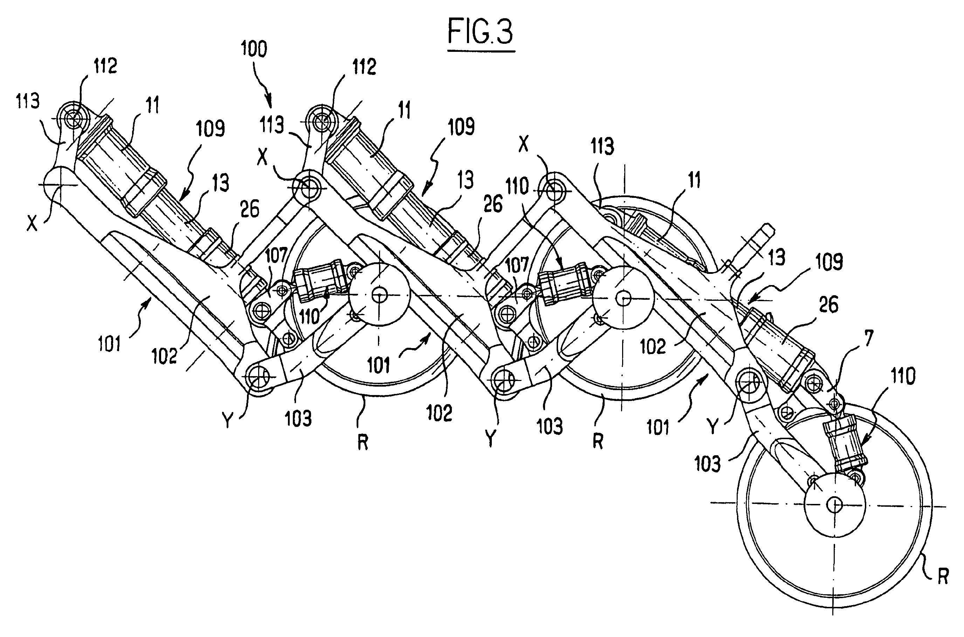

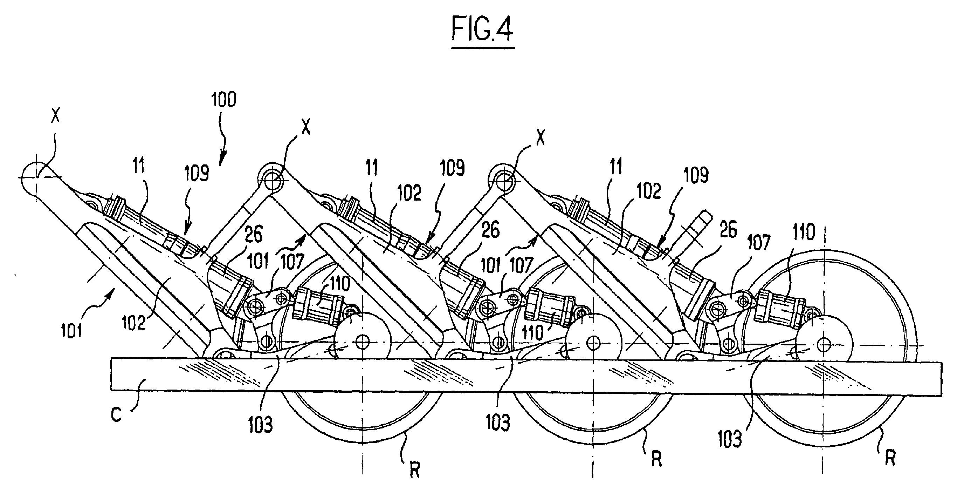

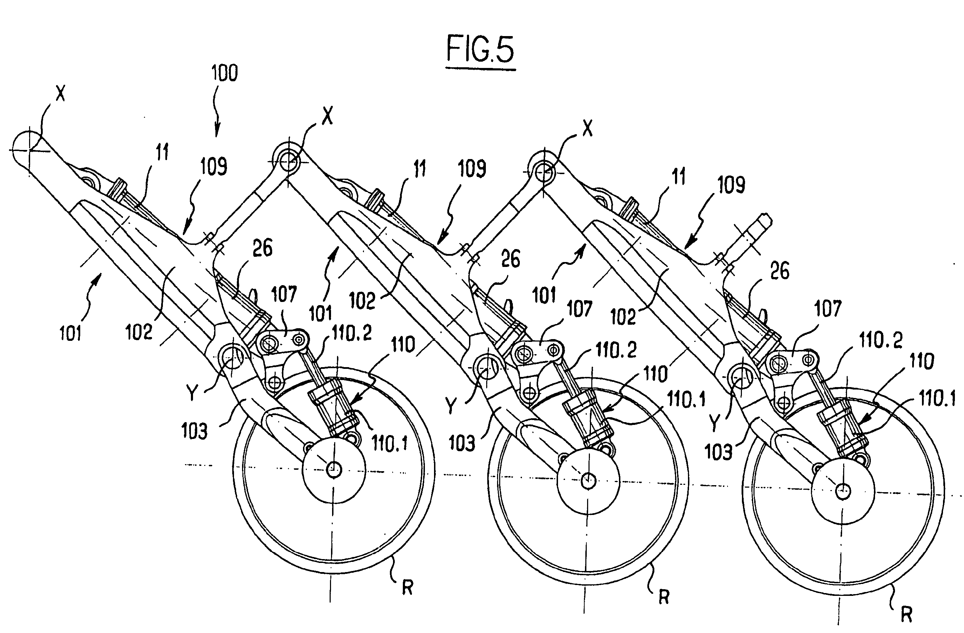

Sur la figure 1, qui illustre la position train bas avec l'amortisseur tout détendu pour chaque jambe 101, on distingue ainsi les trois composants principaux de l'amortisseur prolongé 109, à savoir le caisson principal 11, la tige-piston 13, et le caisson secondaire 26. Sur la figure 3, on distingue également les trois composants 11, 13, 26 de chaque amortisseur prolongé 109. Sur la figure 4, il est intéressant de noter que l'on ne distingue pas la tige-piston 13 de chacun des amortisseurs prolongés 109. Ceci illustre une caractéristique intéressante sur laquelle il sera revenu plus loin, et selon laquelle, en position d'affaissement maximum par rapport au carénage C tel que cela est illustré sur la figure 4, ce qui correspond à la position de raccourcissement maximum de l'amortisseur prolongé par suite de la rentrée de la tige-piston dans le caisson secondaire, le caisson secondaire 26 vient en butée contre le caisson principal 11. Cette butée positive pour chaque amortisseur prolongé 109 garantit une garde au sol prédéterminée pour l'aéronef dans la position d'affaissement maximal des jambes de train concernées. Sur la figure 5 enfin, on distingue par contre à nouveau les trois composants 11, 13, 26 de chaque amortisseur prolongé 109.

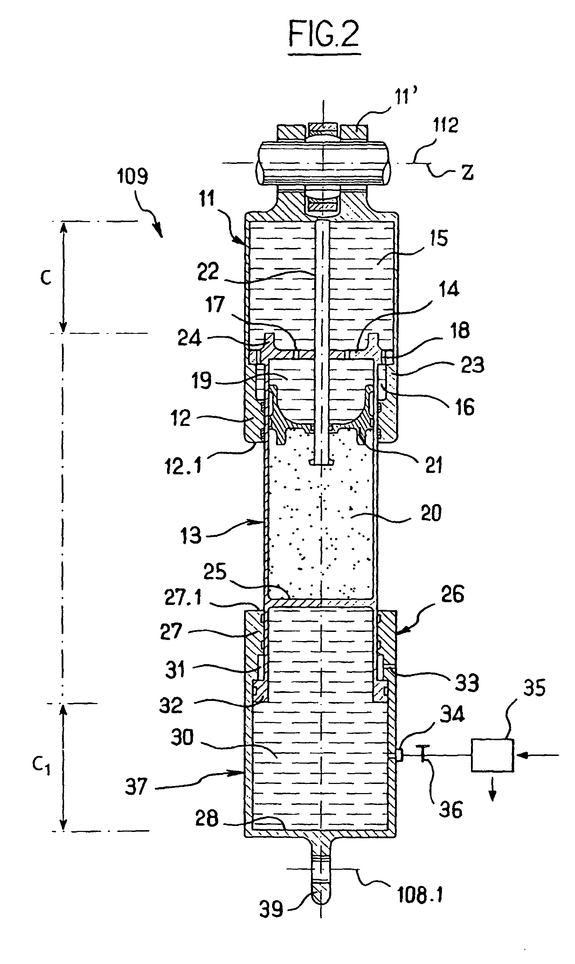

Sur la figure 1, on a illustré en coupe, pour la jambe de train centrale, l'ensemble articulé constitué par l'amortisseur prolongé 109 et le vérin de positionnement 110. La structure particulière de l'amortisseur prolongé 109 sera cependant mieux comprise en se référant à la coupe de la figure 2 qui va être maintenant décrite plus en détail.

La partie supérieure (sur le dessin mais pas nécessairement dans la réalité) de l'amortisseur 109 illustré sur la figure 2, partie qui est dédiée à la fonction classique d'absorbeur de chocs et de vibrations, est de structure classique. On distingue ainsi un caisson principal 11 comportant des oreilles 11' pour son articulation sur un axe 112 dont la direction est transversale au plan longitudinal médian de l'aéronef. Une tige-piston 13 est également prévue, dont une extrémité supérieure coulisse dans le caisson principal 11 coaxialement à l'axe central de celui-ci. La paroi terminale 14 de la tige-piston 13 délimite avec le caisson principal 11 une chambre principale 15 de fluide hydraulique, et une chambre annulaire 16 de fluide hydraulique communiquant avec ladite chambre principale par l'intermédiaire d'un diaphragme associé 18. La tige-piston 13 présente en outre intérieurement deux chambres adjacentes 19, 20 isolées l'une de l'autre par un piston séparateur 21, dont une chambre 19 de fluide hydraulique qui communique avec la chambre principale 15 par l'intermédiaire d'un diaphragme associé 17 ménagé dans la paroi transversale 14 de la tige-piston 13, et une chambre 20 de gaz sous pression. L'extrémité concernée de la tige-piston 13 coulisse ainsi télescopiquement dans la partie inférieure élargie 12 du caisson principal 11.

La position illustrée sur la figure 2 correspond à une position d'extension maximale, dans laquelle la paroi terminale 14 vient en butée contre un épaulement associé 23 du caisson principal 11. La position de rentrée maximale de la tige piston 13 dans le caisson principal 11 est quant à elle donnée par la venue en butée de protubérances 24, ménagées sur la paroi 14, avec le fond dudit caisson principal 11. On a ici prévu la présence d'un tube central de remplissage 22 permettant le remplissage initial de la chambre de gaz sous pression 20. La chambre de gaz sous pression 20 est ainsi délimitée par le piston séparateur 21 d'un côté, et par une cloison transversale terminale 25 constituant le fond de la tige-piston 13 de l'autre côté. Cette partie supérieure de l'amortisseur, dont la conception est classique, assure la fonction habituelle d'amortissement des chocs et vibrations.

On va maintenant décrire la partie inférieure de l'amortisseur 109 qui est associée à une double fonction positionnelle de la jambe associée.

La tige-piston 13 se prolonge en effet au-delà de son fond 25, de façon à présenter une extension sur laquelle vient coulisser un autre caisson référencé 26, constituant un caisson secondaire. Ce caisson secondaire 26 a ainsi une extrémité élargie 27 qui coulisse télescopiquement sur l'extrémité inférieure de la tige-piston 13 en délimitant avec le fond 25 de ladite tige piston une chambre secondaire 30 de fluide hydraulique. Le caisson secondaire 26 présente à son autre extrémité un fond 28 délimitant avec le fond 25 la chambre secondaire 30 précitée. La chambre secondaire 30 de fluide hydraulique est fermée par un organe associé de verrouillage hydraulique 36. En outre, la partie supérieure 27 du caisson secondaire 26 délimite avec la partie inférieure 32 de la tige-piston 13 une chambre secondaire annulaire 31 qui est en permanence mise à l'air libre via un canal associé débouchant 33.

La chambre secondaire de fluide hydraulique 30 est reliée à un circuit de commande associé constitué par une valve de communication 34 fixée à travers la paroi du caisson 26 et reliée à une électrovanne de commande 35. L'organe de verrouillage hydraulique 36 est ici piqué au niveau des organes de commande précités, mais on pourrait naturellement prévoir un organe de verrouillage agencé en un autre point, par exemple au niveau du fond 28 du caisson secondaire 26.

Ainsi, en actionnant l'électrovanne de commande 35 et le verrou hydraulique 36, on peut intervenir sur le volume de la chambre secondaire 30. Ceci permet de provoquer le déplacement relatif entre le caisson secondaire 36 et la partie restante de l'amortisseur 109.

Dans la position illustrée sur la figure 2, la chambre de fluide hydraulique 30 présente un volume maximal, ce qui correspond à une longueur maximale de l'amortisseur prolongé 109. La partie de positionnement correspondante 37 est alors dans sa position la plus éloignée du caisson primaire 11. Si l'on souhaite affaisser la jambe de train correspondante, il suffit alors d'agir sur le verrou hydraulique 36 pour laisser s'écouler le fluide hydraulique de la chambre 30, cet écoulement se faisant naturellement du fait que l'amortisseur est soumis à la charge statique de l'aéronef. Cette sortie de fluide hydraulique s'accompagne d'une rentrée progressive de la tige-piston 13 à l'intérieur du caisson secondaire 26, et par suite d'un raccourcissement de la longueur totale de l'amortisseur prolongé 109. Lorsqu'on veut ensuite revenir à la position initiale (illustrée sur la figure 2), il suffit de remplir à nouveau la chambre hydraulique 30 en agissant sur l'électrovanne de commande 35.

On pourrait prévoir que le mouvement précité de rentrée et de raccourcissement se poursuit jusqu'à la venue en butée de la partie élargie 32 de la tige-piston 13 contre le fond 28 du caisson secondaire 26. On a cependant prévu ici un autre système de butée conformément à une caractéristique intéressante de l'invention.

En effet, en position de raccourcissement maximum de l'amortisseur prolongé 109 par suite de la rentrée de la tige-piston 13 dans le caisson secondaire 26, on a prévu que le caisson secondaire 26 vienne en butée contre le caisson principal 11. Ceci veut dire que le bord libre 27.1 de l'extrémité 27 du caisson secondaire 26 vient en contact dans cette position avec le bord libre 12.1 de l'extrémité 12 du caisson principal 11. Ceci est très intéressant dans la pratique, dans la mesure où une telle butée positive permet de garantir une garde au sol prédéterminée pour l'aéronef dans la position d'affaissement maximal des jambes de train concernées. Grâce à ce contact de butée, quand on charge l'aéronef, il n'y a aucun risque d'enfoncement supplémentaire, de sorte que l'assiette de l'aéronef reste constante. La garde au sol est garantie, et on est tout à fait assuré que les carénages de l'aéronef ne viendront pas au contact du sol par suite d'un chargement maximal. Il va de soi qu'en l'absence d'une telle butée, le risque serait important que la roue continue à s'enfoncer.

Sur la figure 2, on a noté c la course d'amortisseur qui correspond à la distance séparant les protubérances 24 du fond du caisson principal 11, et on a noté c1 la course d'affaissement maximum qui correspond à la course de l'extrémité 32 de la tige-piston 13 entre l'épaulement supérieur 33 du caisson secondaire 26 et le fond 28 dudit caisson secondaire.

Conformément à une autre caractéristique de l'invention, chaque jambe 101 comporte en outre un vérin de positionnement 110 qui est relié de façon articulée à l'amortisseur prolongé 109, en étant agencé de façon que l'ensemble constitué par ledit vérin de positionnement et ledit amortisseur prolongé soit interposé entre l'appendice 105 du balancier 103 et au moins un élément mobile 113 faisant partie de la tringlerie de manoeuvre du train. En l'espèce, l'élément mobile précité 113 est le bras d'un levier qui est articulé en 114 sur la pièce de structure 102, et dont l'autre bras 123 sert à l'accrochage de la tige 122 du vérin de relevage 120 de la jambe (illustré seulement sur la jambe avant à la figure 1), dont le corps est articulé en 121 sur la pièce de structure 102 .

La tringlerie de manoeuvre du train qui est illustrée ici ne constitue naturellement qu'un exemple dans le cadre de l'invention, la caractéristique innovante résidant dans l'ensemble articulé constitué par l'agencement combiné de l'amortisseur prolongé 109 et le vérin de positionnement 110.

Une bielle de liaison 107 est en outre interposée entre le balancier 103 et la zone d'articulation entre le vérin de positionnement 110 et l'amortisseur prolongé 109.

En l'espèce, la bielle de liaison 107 est une bielle coudée à trois points d'articulation distincts notés 108.1, 108.2, 108.3. Le premier point d'articulation 108.1 est associé à l'amortisseur prolongé 109, le second 108.2 est associé au vérin de positionnement 110, et le troisième 108.3 est associé à l'appendice intermédiaire 106 du balancier 103. On pourrait naturellement prévoir en variante une bielle de liaison 107 rectiligne à deux points d'articulation, en regroupant les articulations 108.1 et 108.2 au niveau d'un même axe transversal. Une telle conception serait apparemment plus simple, mais on perdrait un rotulage sur un élément, l'agencement à trois points illustré ici permettant d'éviter les efforts tranchants au niveau de l'amortisseur prolongé et du vérin de positionnement.

Le vérin de positionnement 110 est donc ainsi articulé entre un point 111 d'un appendice terminal 105 du balancier 103 et le point d'articulation 108.2 de la bielle de liaison coudée 107. Il est à noter que le vérin de positionnement 110 de chaque jambe constitue un composant séparé démontable individuellement, ce qui est très intéressant dans la pratique.

Le vérin de positionnement 110 est un vérin hydraulique dont le corps est noté 110.1, et la tige 110.2. On pourra prévoir d'équiper le vérin de positionnement d'organes de verrouillage de type hydraulique ou mécanique, afin d'éviter tout risque de détente de l'amortisseur en cas de fuite du fluide hydraulique.

Ainsi que cela est aisé à comprendre, la sortie de la tige 110.2 du vérin de positionnement 110 hors du corps 110.1 dudit vérin produit un rallongement du vérin de positionnement par rapport à une position d'utilisation normale, rallongement qui correspond à un rehaussement de la jambe concernée 101. Si l'on se reporte à la figure 5, on distingue justement une telle position de rehaussement du train, dont chaque jambe présente un amortisseur enfoncé sous charge statique, et un vérin de positionnement en état d'extension maximale. De préférence, une butée de contrôle intervient dans la position de rallongement maximum du vérin du positionnement 110 par suite de la sortie de la tige 110.2 hors du corps 110.1 dudit vérin, ce qui garantit la constance de la position de rehaussement pour la jambe de train concernée. Il est à noter que l'on peut aisément, dans cette position de rehaussement maximal, sortir une roue crevée, ce qui n'était pas possible avec les systèmes antérieurs précités.

A titre indicatif, on pourra réaliser un ensemble articulé comportant un amortisseur prolongé 109 et un vérin de positionnement 110 permettant d'avoir une course centre roue de 600 mm, une course d'affaissement (on dit parfois de baraquage) de 570 mm, et une course de rehaussement au moins égale à 240 mm. Un tel ensemble articulé à triple fonction permet donc à la fois d'assurer la fonction d'amortisseur requise, qui est remplie de façon classique, et la double fonction positionnelle en vue d'un affaissement ou d'un rehaussement de la jambe de train concernée.

Dans le mode de réalisation particulier qui est illustré ici, et qui vient d'être décrit, l'amortisseur prolongé 109 est interposé entre la bielle de liaison 107 et l'élément mobile de tringlerie 113, et le vérin de positionnement 110 est interposé entre la bielle de liaison 107 et l'appendice 105 du balancier 103. I1 sera cependant possible d'envisager une autre variante, non illustrée ici, dans laquelle l'amortisseur prolongé 109 serait interposé entre la bielle de liaison 107 et l'appendice 105 du balancier 103, et le vérin de positionnement 110 serait interposé entre la bielle de liaison 107 et l'élément mobile de tringlerie 113.

Par ailleurs, on a prévu que la bielle de liaison 107 était ici accrochée sur un appendice intermédiaire 106 du balancier 103, mais on pourrait également prévoir en variante que cette bielle de liaison soit accrochée au balancier au niveau de l'axe Y d'articulation de celui-ci.

On a en outre illustré ici un balancier 103 qui est coudé en forme de V à pointe tournée vers le bas, l'appendice intermédiaire 106 du balancier 103 étant agencé au niveau de l'intérieur de ladite pointe. On pourra en variante prévoir que le balancier soit essentiellement rectiligne, de son axe d'articulation Y à l'appendice terminal 105 dudit balancier sur lequel est articulé l'amortisseur 109 ou le vérin de positionnement 110.

Il sera enfin intéressant de prévoir que les amortisseurs prolongés 109 du train d'atterrissage ont des circuits de commande 34, 35 agencés pour permettre une commande d'individuelle sélective ou une commande groupée du raccourcissement desdits amortisseurs.

De la même façon, on pourra prévoir que les vérins de positionnement 110 du train d'atterrissage ont des circuits de commande (non illustrés ici) qui sont agencés pour permettre une commande individuelle sélective ou une commande groupée du rallongement desdits vérins.

L'invention n'est pas limitée aux modes de réalisation qui viennent d'être décrits, mais englobe au contraire toute variante reprenant, avec des moyens équivalents, les caractéristiques essentielles énoncées plus haut.

En particulier, on pourra utiliser une génération électrique pour la commande de l'affaissement et/ou du rehaussement et/ou du verrouillage.

On pourra également prévoir, en partie basse de chaque pièce de structure 102, au voisinage de l'axe Y, une butée angulaire (non représentée ici) contre laquelle viendrait buter le balancier associé en position de rehaussement maximum, ce qui permet de faire face à une panne des moyens de verrouillage du vérin de positionnement.

## Revendications

1. Train d'atterrissage relevable d'aéronef, du type à relevage vertical, comportant une pluralité de jambes indépendantes (101) agencées les unes derrière les autres pour former, en position train bas, une rangée parallèle au plan longitudinal médian de l'aéronef, chaque jambe (101) comportant une pièce de structure (102) rigidement solidaire d'une structure d'aéronef, un balancier (103) articulé sur l'extrémité inférieure de ladite pièce de structure de façon que ledit balancier soit déplaçable dans un plan vertical avec sa paire de roues (R), un amortisseur (109) associé au balancier (103) et comportant un caisson principal (11) et une tige-piston (13) dont une extrémité coulisse dans ledit caisson principal coaxialement à l'axe de celui-ci, un appendice (105) du balancier (103), ainsi que au moins un élément mobile (113) faisant partie de la tringlerie de manoeuvre du train, **caractérisé en ce que** l'amortisseur (109) de chaque jambe (101) est prolongé par une partie de positionnement (37) comportant un caisson secondaire (26) coulissant télescopiquement sur l'autre extrémité de la tige-piston (13) dudit amortisseur en délimitant avec le fond (25) de ladite tige-piston une chambre secondaire (30) de fluide hydraulique qui est reliée à un circuit de commande associé (34,35), permettant ainsi de raccourcir la longueur totale de l'amortisseur prolongé (109) en vue d'un affaissement de ladite jambe, et **en ce que** chaque jambe (101) comporte en outre un vérin de positionnement (110) relié de façon articulée à l'amortisseur prolongé (109) en étant agencé de façon que l'ensemble constitué par ledit vérin de positionnement et ledit amortisseur prolongé soit interposé entre l'appendice (105) du balancier (103) et le au moins un élément mobile (113), une bielle de liaison (107) étant en outre interposée entre le balancier (103) et la zone d'articulation entre le vérin de positionnement (110) et l'amortisseur prolongé (109), ledit vérin de positionnement (110) étant agencé pour se rallonger par rapport à une position d'utilisation normale en vue d'un rehaussement de la jambe concernée (101).

2. Train d'atterrissage selon la revendication 1, **caractérisé en ce que** l'amortisseur prolongé (109) est interposé entre la bielle de liaison (107) et l'élément mobile de tringlerie (113), et le vérin de positionnement (110) est interposé entre la bielle de liaison (107) et l'appendice (105) du balancier (103).

3. Train d'atterrissage selon la revendication 1, **caractérisé en ce que** l'amortisseur prolongé (109) est interposé entre la bielle de liaison (107) et l'appendice (105) du balancier (103), et le vérin de positionnement (110) est interposé entre la bielle de liaison (107) et l'élément mobile de tringlerie (113).

4. Train d'atterrissage selon l'une des revendications 1 à 3, **caractérisé en ce que** la bielle de liaison (107) est accrochée sur un appendice intermédiaire (106) du balancier (103) situé entre l'axe (Y) d'articulation du balancier et l'appendice (105) dudit balancier sur lequel est articulé l'amortisseur prolongé (109) ou le vérin de positionnement (110).

5. Train d'atterrissage selon la revendication 4, **caractérisé en ce que** la bielle de liaison (107) est une bielle coudée à trois points d'articulation distincts (108.1, 108.2, 108.3), dont le premier (108.1) est associé à l'amortisseur prolongé (109), le second (108.2) est associé au vérin de positionnement (110), et le troisième (108.3) est associé à l'appendice intermédiaire (106) du balancier (103).

6. Train d'atterrissage selon la revendication 4, **caractérisé en ce que** le balancier (103) est coudé en forme de V à pointe tournée vers le bas, et l'appendice intermédiaire (106) du balancier (103) est agencé au niveau de l'intérieur de ladite pointe.

7. Train d'atterrissage selon l'une des revendications 1 à 6, **caractérisé en ce qu'**en position de raccourcissement maximum de l'amortisseur prolongé (109) par suite de la rentrée de la tige-piston (13) dans le caisson secondaire (26), ledit caisson secondaire (26) vient en butée contre le caisson principal (11), ce qui garantit une garde au sol prédéterminée pour l'aéronef dans la position d'affaissement maximal des jambes de train concernées.

8. Train d'atterrissage selon l'une des revendications 1 à 7, **caractérisé en ce qu'**en position de rallongement maximum du vérin de positionnement (110) par suite de la sortie de la tige (110.2) du vérin hors du corps (110.1) dudit vérin, une butée de contrôle intervient, ce qui garantit la constance de la position de rehaussement pour la jambe de train concernée.

9. Train d'atterrissage selon l'une des revendications 1 à 8, **caractérisé en ce que** les amortisseurs prolongés (109) dudit train ont des circuits de commande (34,35) agencés pour permettre une commande individuelle sélective ou une commande groupée du raccourcissement desdits amortisseurs.

10. Train d'atterrissage selon l'une des revendications 1 à 8, **caractérisé en ce que** les vérins de positionnement (110) dudit train ont des circuits de commande agencés pour permettre une commande individuelle sélective ou une commande groupée du rallongement desdits vérins.

## Claims

1. Retractable landing gear for an aircraft, the landing gear being of the type that is raised vertically and comprising a plurality of independent legs (101) arranged one behind another to form, in the gear-down position, a row parallel to the longitudinal midplane of the aircraft, each leg (101) comprising a structural part (102) rigidly secured to a structure of the aircraft, a rocker beam (103) hinged to the bottom end of said structural part so that said rocker beam is movable in a vertical plane together with its pair of wheels (R), a shock absorber (109) associated with the rocker beam (103) and comprising a main strut (11) and a rod piston (13) having one end slidably received in said main strut coaxially about the axis thereof, an appendix (105) of the rocker beam (103), and at least one moving element (113) forming part of the control rodding of the landing gear, the landing gear being **characterized in that** the shock absorber (109) of each leg (101) is extended by a positioning portion (37) comprising a secondary strut (26) sliding telescopically on the other end of the rod piston (13) of said shock absorber, co-operating with the end wall (25) of said rod piston to define a secondary hydraulic fluid chamber (30) which is connected to an associated control circuit (34, 35), thus enabling the total length of the extended shock absorber (109) to be shortened in order to collapse said leg, and **in that** each leg (101) further includes a positioning actuator (110) connected in hinged manner to the extended shock absorber (109), being arranged so that the assembly constituted by said positioning actuator and said extended shock absorber is interposed between the appendix (105) of the rocker beam (103) and the at least one moving element (113), a link rod (107) also being interposed between the rocker beam (103) and the hinged zone between the positioning actuator (110) and the extended shock absorber (109), said positioning actuator (110) being arranged to lengthen relative to a normal use position in order to lengthen the corresponding leg (101).

2. Landing gear according to claim 1, **characterized in that** the extended shock absorber (109) is interposed between the link rod (107) and the moving rodding element (113), and the positioning actuator (110) is interposed between the link rod (107) and the appendix (105) of the rocker beam (103).

3. Landing gear according to claim 1, **characterized in that** the extended shock absorber (109) is interposed between the link rod (107) and the appendix (105) of the rocker beam (103), and the positioning actuator (110) is interposed between the link rod (107) and the moving rodding element (113).

4. Landing gear according to any one of claims 1 to 3, **characterized in that** the link rod (107) is fastened to an intermediate appendix (106) of the rocker beam (103) situated between the hinge axis (Y) of the rocker beam and the appendix (105) of said rocker beam on which the extended shock absorber (109) or the positioning actuator (110) is hinged.

5. Landing gear according to claim 4, **characterized in that** the link rod (107) is a bell-crank having three distinct hinge points (108.1, 108.2, 108.3), with the first hinge point (108.1) being associated with the extended shock absorber (109), the second hinge point (108.2) being associated with the positioning actuator (110), and the third hinge point (108.3) being associated with the intermediate appendix (106) of the rocker beam (103) .

6. Landing gear according to claim 4, **characterized in that** the rocker beam (103) is bent into a V-shape with a downwardly-directed tip, and the intermediate appendix (106) of the rocker beam (103) is arranged inside said tip.

7. Landing gear according to any one of claims 1 to 6, **characterized in that** in the maximally-shortened position of the extended shock absorber (109) due to the rod piston (13) entering into the secondary strut (26), said secondary strut (26) comes into abutment against the main strut (11), thereby guaranteeing predetermined ground clearance for the aircraft in the maximally-collapsed position of the corresponding landing gear legs.

8. Landing gear according to any one of claims 1 to 7, **characterized in that** in the maximally-lengthened position of the positioning actuator (110) due to the rod (110.2) of the actuator being extended from the body (110.1) of said actuator, control abutment takes place, thereby guaranteeing that the lengthened position of the corresponding landing gear leg is constant.

9. Landing gear according to any one of claims 1 to 8, **characterized in that** the extended shock absorbers (109) of said landing gear have control circuits (34, 35) arranged to enable selective individual control or group control of the shortening of said shock absorbers.

10. Landing gear according to any one of claims 1 to 8, **characterized in that** the positioning actuators (110) of said landing gear have control circuits arranged to enable selective individual control or group control of the lengthening of said actuators.

## Patentansprüche

1. Einziehbares Flugzeug-Fahrwerk vom Typ mit vertikalem Einzug, umfassend eine Vielzahl unabhängiger Fahrwerkbeine (101) die hintereinander angeordnet sind, um in der ausgefahrenen Position eine zur Längsmittelebene des Flugzeugs parallele Reihe zu bilden, wobei jedes Fahrwerkbein (101) ein Strukturteil (102) umfasst, das starr mit einer Flugzeugsstruktur verbunden ist, einen Schwenkhebel (103), der an dem unteren Ende des genannten Strukturteils derart angelenkt ist, dass der Schwenkhebel in einer vertikalen Ebene mit seinem Räderpaar (R) bewegbar ist, einen Stoßdämpfer (109), der mit dem Schwenkhebel (103) verbunden ist und ein Hauptgehäuse (11) und eine Kolbenstange (13) umfasst, deren eines Ende in dem genannten Hauptgehäuse koaxial zur Achse desselben gleitet, ein Ansatzstück (105) des Schwenkhebels (103) sowie mindestens ein bewegliches Element (113), das zum Lenkgestänge des Fahrwerks gehört, **dadurch gekennzeichnet, dass** der Stoßdämpfer (109) jedes Fahrwerkbeines (101) von einem Positionierungsabschnitt (37) verlängert wird, der ein Nebengehäuse (26) umfasst, das sich an dem anderen Ende der Kolbenstange (13) des genannten Stoßdämpfers teleskopisch verschieben lässt, indem es mit dem Boden (25) der Kolbenstange eine Nebenkammer (30) mit Hydraulikfluid begrenzt, die mit einem dazugehörigen Steuerkreis (34, 35) verbunden ist, der auf diese Weise das Verkürzen der Gesamtlänge des verlängerten Stoßdämpfers (109) zum Einziehen des Fahrwerkbeines ermöglicht, und dass jedes Fahrwerkbein (101) ferner einen Positionierungszylinder (110) umfasst, der über eine Gelenkverbindung mit dem verlängerten Stoßdämpfer (109) verbunden ist, indem er derart angeordnet ist, dass die aus dem genannten Positionierungszylinder und dem genannten verlängerten Stoßdämpfer gebildete Einheit zwischen dem Ansatzstück (105) des Schwenkhebels (103) und dem mindestens einen beweglichen Element (113) angeordnet wird, wobei ferner ein Verbindungshebel (107) zwischen dem Schwenkhebel (103) und der Gelenkverbindungszone zwischen dem Positionierungszylinder (110) und dem verlängerten Stoßdämpfer (109) angeordnet ist, und wobei der Positionierungszylinder (110) derart angeordnet ist, dass er sich gegenüber einer normalen Gebrauchsstellung verlängert, um das betreffende Fahrwerkbein (101) anzuheben.

2. Fahrwerk nach Anspruch 1, **dadurch gekennzeichnet, dass** der verlängerte Stoßdämpfer (109) zwischen dem Verbindungshebel (107) und dem beweglichen Element (113) des Gestänges angeordnet ist, und der Positionierungszylinder (110) zwischen dem Verbindungshebel (107) und dem Ansatzstück (105) des Schwenkhebels (103) angeordnet ist.

3. Fahrwerk nach Anspruch 1, **dadurch gekennzeichnet, dass** der verlängerte Stoßdämpfer (109) zwischen dem Verbindungshebel (107) und dem Ansatzstück (105) des Schwenkhebels (103) angeordnet ist, und der Positionierungszylinder (110) zwischen dem Verbindungshebel (107) und dem beweglichen Element (113) des Gestänges angeordnet ist.

4. Fahrwerk nach einem der Ansprüche 1 bis 3, **dadurch gekennzeichnet, dass** der Verbindungshebel (107) an einem Zwischenansatzstück (106) des Schwenkhebels (103) befestigt ist, das sich zwischen der Gelenkachse (Y) des Schwenkhebels und dem Ansatzstück (105) des Schwenkhebels befindet, an dem der verlängerte Stoßdämpfer (109) oder der Positionierungszylinder (110) angelenkt ist.

5. Fahrwerk nach Anspruch 4, **dadurch gekennzeichnet, dass** der Verbindungshebel (107) eine Winkelstange mit drei verschiedenen Gelenkverbindungspunkten (108.1, 108.2, 108.3) ist, von denen der erste (108.1) mit dem verlängerten Stoßdämpfer (109) verbunden ist, der zweite (108.2) mit dem Positionierungszylinder (110) verbunden ist und der dritte (108.3) mit dem Zwischenansatzstück (106) des Schwenkhebels (103) verbunden ist.

6. Fahrwerk nach Anspruch 4, **dadurch gekennzeichnet, dass** der Schwenkhebel (103) V-förmig gebogen ist, mit nach unten zeigender Spitze, und das Zwischenansatzstück (106) des Schwenkhebels (103) im Bereich des Inneren der genannten Spitze angeordnet ist.

7. Fahrwerk nach einem der Ansprüche 1 bis 6, **dadurch gekennzeichnet, dass** das Nebengehäuse (26) in der maximalen Verkürzungsstellung des verlängerten Stoßdämpfers (109) infolge des Rückzugs der Kolbenstange (13) in das Nebengehäuse (26) an dem Hauptgehäuse (11) anstoßen wird, wodurch eine vorgegebene Bodenfreiheit für das Flugzeug in der maximalen Absenkposition der betroffenen Fahrwerkbeine garantiert wird.

8. Fahrwerk nach einem der Ansprüche 1 bis 7, **dadurch gekennzeichnet, dass** in der maximalen Verlängerungsposition des Positionierungszylinders (110) infolge des Austritts der Stange (110.2) des Zylinders aus dem Gehäuse (110.1) des genannten Zylinders ein Steueranschlag eingreift, wodurch die Konstanz der Anhebungsposition für das betreffende Fahrwerkbein garantiert wird.

9. Fahrwerk nach einem der Ansprüche 1 bis 8, **dadurch gekennzeichnet, dass** die verlängerten Stoßdämpfer (109) des Fahrwerks Steuerkreise (34, 35) haben, die derart angeordnet sind, dass sie eine selektive Einzelsteuerung oder eine Gruppensteuerung zum Verkürzen der genannten Stoßdämpfer ermöglichen.

10. Fahrwerk nach einem der Ansprüche 1 bis 8, **dadurch gekennzeichnet, dass** die Positionierungszylinder (110) des Fahrwerks Steuerkreise haben, die derart angeordnet sind, dass sie eine selektive Einzelsteuerung oder eine Gruppensteuerung zum Verlängern der genannten Zylinder ermöglichen.
